# EUROPÄISCHE PATENTSCHRIFT

(11) **EP 4 399 013 B1**
(45) Veröffentlichungstag und Bekanntmachung des Hinweises auf die Patenterteilung: **04.12.2024**
(21) Anmeldenummer: 23809654.9
(22) Anmeldetag: 23.11.2023
(51) Int. Cl.: B01D 53/62, B01D 53/83, B01D 45/16, B01J 20/04, B01J 20/30, B09B 3/35, B09B 3/70

(54) **VERFAHREN UND VORRICHTUNG ZUR EFFIZIENTEN REDUKTION VON KOHLENDIOXIDEMISSIONEN**
METHOD AND APPARATUS FOR EFFICIENT REDUCTION OF CARBON DIOXIDE EMISSIONS
PROCÉDÉ ET APPAREIL DE RÉDUCTION EFFICACE DES ÉMISSIONS DE DIOXYDE DE CARBONE

(30) Priorität: 02.12.2022 DE 102022132073; 02.12.2022 LU 103046
(43) Veröffentlichungstag der Anmeldung: 17.07.2024
(73) Patentinhaber: thyssenkrupp Polysius GmbH, 59269 Beckum (DE); thyssenkrupp AG, 45143 Essen (DE)
(72) Erfinder: RATZLAFF, Sergej, 59555 Lippstadt (DE); BERGER, Claudia, 08393 Schönberg (DE); MAIER, Oliver, 48167 Münster (DE); KÖSTERS, Justus, 59269 Beckum (DE)
(74) Vertreter: thyssenkrupp Intellectual Property GmbH
(86) Internationale Anmeldenummer: PCT/EP2023/082820
(87) Internationale Veröffentlichungsnummer: WO 2024/115265

(56) Entgegenhaltungen:
- EP-A1- 3 778 525
- CN-A- 112 191 091
- FR-A1- 3 113 465
- US-A1- 2001 054 253
- US-A1- 2010 068 109
- US-A1- 2022 212 992

## Beschreibung

Die Erfindung betrifft ein Verfahren, um mit Altbaustoffen, zum Beispiel Zementstein, Kohlendioxid sicher zu binden und so eine sichere Langzeitlagerung zu gewährleisten.

In zunehmenden Maße wird es notwendig, natürliche Ressourcen zu schonen und auch recyceltes Material zurückzugreifen. Ebenso sind die Emissionen von Kohlendioxid als Ursache für die globale Erwärmung kritisch. Daher wird zunehmend auf die Abtrennung von Kohlendioxid aus dem Abgas und dessen dauerhafte Speicherung oder Nutzung gesetzt. Eine mögliche Form ist die Einbringung als verflüssigtes Kohlendioxid in das Erdreich. Dieses Verfahren ist jedoch nicht unumstritten, da ein dauerhafter Verbleib nicht zwangsläufig garantiert ist und bei einem Entweichen damit der Treibhauseffekt wieder verstärkt werden würde, zumal für Abtrennung und Lagerung weitere Energie benötigt wird und damit potentiell wieder Kohlendioxid produziert wird.

Eine der Kohlendioxid-intensiven Industrien ist die Zementindustrie. Zum einen wird für den Prozess viel Energie benötigt, was bei den herkömmlichen fossilen Brennstoffen zu einer Kohlendioxid-Emission führt. Zum anderen wird aus dem Rohmaterial, beispielsweise Kalkstein, Kohlendioxid prozessbedingt freigesetzt.

Auf der anderen Seite fallen bei Abriss von Beton-Bauwerken große Mengen von Altbeton an. Daher wird derzeit diskutiert, Beton wiederaufzubereiten, um beispielsweise neuen Zement herzustellen. Hierbei ist jedoch problematisch, dass beispielsweise Sand und der abgebundene Zement schwer trennbar miteinander vermischt und verbunden sind. Die sandfreie oder wenigstens sandarme Komponente des Altbetons wird auch als Altzementstein bezeichnet. Es ist bekannt, dass Beton während der Lebensdauer Kohlendioxid aufnehmen kann, jedoch nur einen Bruchteil der bei der Herstellung aus dem Kalkstein freigesetzten Kohlendioxid. Nach langer Zeit, beispielsweise bei sehr alten Gebäuden, kann dieser Wert bei etwa 20 % bezogen auf den Calciumgehalt des Betons liegen, es wird also sehr langsam und damit über lange Zeiträume in etwa 1/5 des ursprünglich freigesetzten Kohlendioxids wieder aufgenommen.

Aus der WO 2020 / 058 247 A1 ist ein Verfahren und eine Anlage zum Aufbereiten von Material, das Zementstein enthält, bekannt.

Aus der EP 3 656 750 A2 ist die Verwendung von Kohlendioxid aus und für Zement bekannt.

Aus der US 2001 / 054253 A1 ist ein Verfahren zur Reduktion von Kohlendioxidemissionen bekannt.

Aus der FR 3 113 465 A1 ist ein forcierter Carbonisierungsprozess einer Feinfraktion von Rückbaubeton bekannt.

Aus der US 2010 / 0068109 A1 ist ein Material und ein Verfahren zur Kohlendioxid-Sequestration bekannt.

Aufgabe der Erfindung ist es, ein sicheres und dauerhaftes Verfahren zur Abtrennung und Endlagerung von Kohlendioxid bereitzustellen ohne dabei einen aufwändigen, insbesondere energieaufwändigen Prozess zu benötigen, der selbst eine neue Emissionsquelle darstellt.

Gelöst wird diese Aufgabe durch das Verfahren mit den in Anspruch 1 angegebenen Merkmalen sowie durch die Kohlendioxidabtrennungsanlage mit den in Anspruch 13 angegebenen Merkmalen. Vorteilhafte Weiterbildungen ergeben sich aus den Unteransprüchen, der nachfolgenden Beschreibung sowie den Zeichnungen.

Das erfindungsgemäße Verfahren dient zur Bindung von Kohlendioxid an einen Altbaustoff. Der Altbaustoff ist Altbeton oder ein Produkt aus Altbeton, beispielsweise Altzementstein. Altzementstein ist hierbei der um die Sand/Kies-Komponente abgereicherte Komponente, welche somit einen höheren Anteil an CalciumVerbindungen aufweist. Das Verfahren weist die folgenden nacheinander durchgeführten Schritte auf:
a) Bereitstellen des Altbaustoffes,
b) Befeuchten des Altbaustoffes auf eine Feuchte von 5 bis 25 Gew.-%,
c) Einbringen des Altbaustoffes in einen Kohlendioxid-haltigen Gasstrom und Transport des Altbaustoffes im Gasstrom für wenigstens 1 s in einem Flugstromreaktor,
d) Abtrennen des Altbaustoffes aus dem Gasstrom.

Die Schritte werden bezogen auf die einzelnen Partikel des Altbaustoffes nacheinander durchgeführt. Da es sich um einen kontinuierlichen Prozess handelt, werden alle Verfahrensschritte gleichzeitig, aber entlang der Prozesskette durchgeführt.

Das Verfahren unterscheidet damit grundlegend von bisherigen Verfahren. Denn die Behandlung findet während des Transport im Gasstrom statt. Es wird also nicht wie bisher in einer wässrigen Umgebung durchgeführt, sondern vergleichsweise halbtrocken im Gasstrom.

Wesentlich für das Verfahren ist, dass das Verfahren in einem Flugstromreaktor erfolgt. Damit unterscheidet sich das Verfahren wesentlich von einer Wirbelschicht, wie zum Beispiel in der US 2001 / 005453 A1 gezeigt, oder einen gegen den Gasstrom absinken Slurry, wie in der US 2010 / 0068109 A1 gezeigt. Wesentlich für den Transport in einem Gasstrom eines Flugstromreaktors sind insbesondere zwei Parameter. Zum einen liegt die Beladung in der Größenordnung um 1 kg Feststoff je kg Gas oder auch deutlich darunter. Zum anderen ist die Partikelgröße klein genug zu wählen, was wiederum bedeutet, dass die Partikel eben auch separiert und nicht als Slurry vorliegen müssen, um von einem Gasstrom in einem Flugstromreaktor transportiert werden zu können. Dieses setzt aber eben auch voraus, dass die flugfähigen Partikel nicht durch Wasser zu größeren Agglomeraten zusammengeführt werden dürfen.

Dadurch ist das Verfahren besonders schonend. Hierdurch erfolgt die Umsetzung direkt von der Gasphase, welche Kohlendioxid enthält, mit dem Altbaustoff. Hierdurch kann für vergleichswiese kleine Partikel (damit diese flugfähig sind) eine sehr schnelle Umsetzung erreicht werden. Gleichzeitig ist durch den Transport in der Gasphase auch eine leichte Abtrennbarkeit kleinster Partikel gegeben, sodass sich leicht auch unterschiedliche Verweilzeiten für unterschiedliche Partikelgrößen realisieren lassen. Da die Diffusion im Partikel der geschwindigkeitsbestimmende Schritt ist, erfolgt die Umsetzung umso schneller, je kleiner die Partikel sind. Entsprechend ist eine umso kürzere Verweilzeit nötig. Daher ist die Durchführung in einem Flugstromreaktor vorteilhaft gegenüber anderen Reaktorarten. Wesentlich ist, dass der Altbaustoff auf der einen Seite trocken genug ist, um in einem Gasstrom transportiert zu werden und auf der anderen Seite feucht genug ist, damit die Umsetzung schnell genug ablaufen kann. Daher kann hier beispielsweise die Formulierung halbtrocken gewählt werden. Vorzugsweise kann sich beispielsweise ein dünner Wasserfilm auf der Partikeloberfläche ausbilden oder Wasser in die Partikelporen eindringen. Gleichzeitig soll aber verhindert werden, dass sich ein Schlamm bildet, der eben nicht mehr im Gasstrom transportiert und behandelt werden kann. Dieses Optimum ist für Altbaustoffe, insbesondere Altzementstein, bei 5 bis 25 Gew.-% Wasseranteil (Feuchte) gegeben. Die Feuchte umfasst dabei nur flüchtiges Wasser, also kein Kristallwasser oder anderweitig in der Kristallstruktur eingebundenes Wasser. Lediglich dieses auf der Oberfläche befindliche freie Wasser steht für die eigentliche Reaktion zur Verfügung. Daher ist die Einstellung der Feuchte auf das vergleichsweise enge Fenster der Feuchte von 5 bis 25 Gew.-% wesentlich, da so die Flugfähigkeit gegeben bleibt.

Die Bestimmung der Feuchte kann dabei in einem konventionellen Feuchtemessgerät, beispielsweise bei 80 °C erfolgen. Dadurch ist sichergestellt, dass nur die Feuchte auf der Oberfläche, was auch die Poren mit umfasst, erfasst wird, Kristallwasser aber nicht mit erfasst wird.

Die erfindungsgemäße Kombination aus einer Feuchte, also freiem Wasser auf der Oberfläche, von 5 bis 25 Gew.-% und der Reaktion im Flugstrom führt zu einer besonders einfachen und schnellen Umsetzung.

Altbaustoff im Sinne der Erfindung umfasst insbesondere Bauschutt, Bruchbeton, Zementstein und dergleichen in verschiedenen Aufbereitungsstufen.

In einer weiteren Ausführungsform der Erfindung erfolgt vor oder nach dem Einbringen in Schritt c) eine Zerkleinerung. Die Zerkleinerung umfasst insbesondere auch eine Desagglomeration von zusammenhaftenden Teilchen, Insbesondere durch das Befeuchten in Schritt b) kann es zum Zusammenhaften von Teilchen kommen.

Beispielswiese erfolgt der Transport und damit die Umsetzung in Schritt c) in einem Steigrohr. Unterhalb dieses Steigrohrs ist beispielsweise eine Hammermühle angeordnet. Der Altbaustoff kann in dieser Ausführungsform beispielsweise direkt in die Hammermühle eingebracht werden. Alternativ kann der Altbaustoff in das Steigrohr eingebracht werden. In diesem Fall sinken zu große, vom Gasstrom nicht getragene Partikel hinab, gelangen in die Hammermühle, werden dort zerkleinert und vom Gasstrom wieder aufgenommen und transportiert. Die Zerkleinerung führt zu zwei positiven Effekten. Zum einen werden große Partikel kleiner, sodass diese einfacher in einem Gasstrom transportiert werden können. Zum anderen wird durch die kleinere Partikelgröße die Diffusionslänge für das Kohlendioxid reduziert und damit die Reaktionszeit verkürzt.

In einer weiteren Ausführungsform der Erfindung erfolgt während des Transportes in Schritt c) eine Nachbefeuchtung zusätzlich zum Befeuchten in Schritt b). Dieses kann beispielsweise durch das Einsprühen von Wasser erfolgen. Alternativ oder zusätzlich kann auch Dampf verwendet werden. Hierdurch wird eine zu starke Trocknung während des Transports im Gasstrom vermieden. Hierdurch kann insbesondere der Feuchtegehalt in Schritt b) geringer gewählt werden, sodass ein verbesserter Transport im Gasstrom in Schritt c) möglich ist. Zusätzlich kann ein Austrocknen dadurch kompensiert werden, um somit immer innerhalb des Fensters für die Feuchte zu bleiben.

In einer weiteren Ausführungsform der Erfindung erfolgt die Abtrennung in Schritt d) zweistufig. Zunächst werden in einem ersten Teilschritt die größeren Partikel abgeschieden und anschließend in einem zweiten Teilschritt werden die kleineren Partikel abgeschieden. Der erste Teilschritt kann beispielswiese in einem Abscheidezyklon oder einem Sichter erfolgen. Anschließend wird der Gasstrom durch einen Filter geleitet. Im Abscheidezyklon oder im Sichter werden zunächst die größeren Partikel abgeschieden, im Filter die kleinen Partikel. Hierbei können der erste Teilschritt und der zweite Teilschritt gleichzeitig ablaufen. Alternativ können der erste Teilschritt und der zweite Teilschritt nacheinander durchgeführt werden, wobei entweder der erste Teilschritt vor dem zweiten Teilschritt erfolgt oder der zweite Teilschritt vor dem ersten Teilschritt erfolgt.

In einer weiteren Ausführungsform der Erfindung erfolgt nach Schritt d) eine Rückführung des Altbaustoffes, sodass die Schritte b) bis d) wiederholt werden. Hierdurch kann die Beladbarkeit des Altbaustoffes für Kohlendioxid, welche üblicherweise in der Größe von etwa 80 % bis 90 %der Menge an beispielsweise CaO entspricht, ausgeschöpft werden. Erfolgt die Abtrennung zweistufig, sodass zwei unterschiedliche Fraktionen des Altbaustoffes entstehen, so kann beispielsweise nur die Fraktion des ersten Teilschrittes der Abtrennung, also die größeren Partikel, zurückgeführt werden. In diesem Fall werden die im zweiten Teilschritt der Abtrennung abgetrennten feineren Partikel ausgeschleust. Dieses ist bevorzugt, wenn die Fraktion der kleinsten Partikel bereits bei einem einfachen Durchlauf vollständig (im Sinne des technisch sinnvoll möglichen, also insbesondere im Bereich von etwa 80 % bis 95 % der theoretisch maximal möglichen Umsetzung) mit Kohlendioxid beladen wurden. Alternativ kann auch die zweite Fraktion teilweise oder ganz zurückgeführt werden.

In einer weiteren Ausführungsform der Erfindung wird eine Bestimmung des CO₂-Gehalts des Altbaustoffes durchgeführt. Die Rückführung des Altbaustoffes und Wiederholung der Schritte b) bis d) solange erfolgt, bis ein vorgegebener Schwellenwert des CO₂-Gehalts überschritten wird. Üblicherweise geht man von einer maximalen Beladung von etwa 95 % aus, bezogen beispielsweise auf den theoretischen CaO Gehalt des Altbaustoffes. Dieses entspricht dem Wert, den Beton von sich aus unter normalen Umständen in der Lage ist, aufzunehmen. Der Schwellenwert kann daher beispielsweise auf 60 %, 80 %, 85 %, 90 % oder 95 % gesetzt werden, sodass die Aufnahmefähigkeit des Altbaustoffes möglichst weitgehend genutzt wird, ohne in einen kinetisch unvorteilhaften Bereich zu kommen. Wird der Schwellenwert überschritten, so wird der Altbaustoff ausgeschleust und bevorzugt neuer Altbaustoff zugeführt. Während auf natürlichem Wege also maximal bis zu 20 % wieder im Beton gebunden werden, wird durch die Erfindung wesentlich mehr Kohlendioxid in dauerhafter Weise wieder gebunden.

In einer weiteren Ausführungsform der Erfindung wird der Schwellenwert des CO₂-Gehalts auf 60 %, bevorzugt 70 %, weiter bevorzugt 80 %, weiter bevorzugt 85 %, weiter bevorzugt 90 %, weiter bevorzugt 85 %, der Summe an Calcium, Magnesium und Eisen festgelegt. Hierbei kann beispielsweise die Menge an Eisen auch 0 sein, wenn der Altbaustoff kein Eisen enthält. Wie bereits ausgeführt, liegt bei etwa 20 % die Grenze, welche ohne weitere Unterstützung bereits im Gebäude auf Beladung mit Kohlendioxid in einfacher Weise über sehr lange Zeit erreichbar ist, sodass der zugeführte Altbaustoff eine Beladung zwischen 0 % und 20 % aufweist. Durch den Schwellenwert soll verhindert werden, dass eine zu geringe Restaufnahmekapazität (zu dem hypothetisch / rechnerisch möglichen 100 %) dazu führt, dass praktisch kein weiteres Kohlendioxid aus dem Gasstrom aufgenommen wird. Der Schwellenwert stellt somit die Balance sicher zwischen maximaler Ausnutzung der Aufnahmekapazität des Altbaustoffes und der Kinetik der Kohlendioxidabscheidung.

In einer weiteren Ausführungsform der Erfindung erfolgt die Abtrennung in Schritt d) größenselektiv in wenigstens zwei Fraktionen. Dieses kann beispielswiese wie bereits ausgeführt mit einem Abscheidezyklon oder Sichter und einem Filter erfolgen. Hierbei wird die gröbere Fraktion zurückgeführt und die feinere Fraktion wird aus dem Prozess ausgeschleust. Aufgrund der deutlich geringeren Diffusionswege für das Kohlendioxid aus dem Gasstrom ist die Reaktion in kleinen Partikeln deutlich schneller als in großen Partikeln. Daher ist gerade das Ausschleusen von sehr feinen Partikeln, beispielsweise nach Abscheidung aus einem Filter sinnvoll und zielführend.

In einer weiteren Ausführungsform der Erfindung wird nach Schritt d) der Gasstrom wenigstens teilweise vor den Schritt c) zurückgeführt. Hierdurch kann der Kohlendioxid-Gehalt des Gasstromes gesenkt werden. Beispielsweise kann der Gasstrom vollständig zurückgeführt werden, bis eine gewisse vorgegebene Kohlendioxidkonzentration unterschritten ist. Dieses hat den Vorteil, dass besonders geringe Kohlendioxid-Konzentrationen erreichbar sind, jedoch den Nachteil, dass die Behandlung des Gasstromes nur diskontinuierlich erfolgt, was für die meisten Abgase produzierenden Anlagen ungünstig ist. Alternativ erfolgt nur eine teilweise Rückführung. Damit ist eine geringere Kohlendioxid-Konzentration als bei einem einfachen Durchlauf möglich. Gleichzeitig ist eine kontinuierliche Zufuhr und Abfuhr von Gas möglich, was eine Behandlung eines Abgasstromes vereinfacht. Hierbei ist jedoch zu beachten, dass der durch das Verfahren geförderte Gasstrom im Umfang der Rückführung sich vergrößert. Werden beispielsweise 80 % des Gasstroms zurückgeführt, so ist der Gasstrom im Schritt c) fünfmal so groß wie der zugeführte zu reinigende Abgasstrom.

In einer weiteren Ausführungsform der Erfindung wird im Gasstrom nach dem Transport in Schritt c) die Kohlendioxid-Konzentration im Gasstrom erfasst. Der Anteil der vor den Schritt c) zurückgeführten Menge des Gasstroms wird in Abhängigkeit von der ermittelten Kohlendioxidkonzentration gewählt. Diese aktive Regelung ermöglicht beispielsweise die Einhaltung von Emissionswerten. Zusätzlich kann dieses auch genutzt werden um zu erfassen, wenn das Material kein Kohlendioxid mehr aufnehmen kann, also nach erfolgter Reaktion die Aufnahmekapazität für Kohlendioxid erschöpft ist.

In einer weiteren Ausführungsform der Erfindung wird vor und/oder nach dem Befeuchten in Schritt b) eine Messung des Feuchtegehalts durchgeführt. Die Messung des Feuchtegehalts erfolgt bevorzug mittels eines NIR-Sensors. Bevorzugt wird die in der Befeuchtung in Schritt b) in Abhängigkeit des gemessenen Feuchtegehalts geregelt. Wichtig ist, den Feuchtegalt hoch genug zu halten, sodass die Aufnahme des Kohlendioxids gut erfolgt. Auf der anderen Seite soll der Feuchtegehalt niedrig genug bleiben, um einen Transport im Gasstrom zu ermöglichen. Daher ist eine aktive Regelung vorteilhaft.

In einer weiteren Ausführungsform der Erfindung wird als Gasstrom in Schritt c) ein Abgasstrom gewählt. Beispielswiese kann der Abgasstrom aus einem Zementwerk stammen. Beispielsweise weist der Abgasstrom eine Temperatur zwischen 80 °C und 200 °C auf. Besonders bevorzugt erfolgt keine Erwärmung des Abgasstromes. Der Vorteil dieses Verfahrens ist daher der geringe Energieverbrauch für eine sichere und langzeitsichere Bindung des Kohlendioxids aus dem Abgas. Es kann aber auch beispielsweise ein Abgasstrom beispielsweise einer Müllverbrennungsvorrichtung verwendet werden.

In einem weiteren Aspekt betrifft die Erfindung eine Kohlendioxidabtrennungsanlage. Insbesondere ist die Kohlendioxidabtrennungsanlage zur Ausführung des erfindungsgemäßen Verfahrens ausgebildet. Die Kohlendioxidabtrennungsanlage weist eine Gaszuführung, eine der Gaszuführung strömungstechnisch nachgelagerte Behandlungsvorrichtung, eine der Behandlungsvorrichtung strömungstechnisch nachgelagerte Abtrennungsvorrichtung und einen der Abtrennungsvorrichtung strömungstechnisch nachgelagerten Gasablass auf. Weiter weist die Kohlendioxidabtrennungsanlage eine Altbaustoffzufuhr auf. Die Altbaustoffzufuhr ist mit einer Befeuchtungsvorrichtung zur Überführung des Altbaustoffs verbunden. Die Verbindung kann entweder direkt oder beispielsweise über einen dazwischen angeordneten Altbaustoffspeicher realisiert sein. In der Befeuchtungsvorrichtung erfolgt eine Befeuchtung des Altbaustoffes. Die Befeuchtungsvorrichtung ist mit der Behandlungsvorrichtung verbunden. In der Behandlungsvorrichtung trifft somit der befeuchtete Altbaustoffstrom auf den Gasstrom. Hier erfolgt ein Übergang von Kohlendioxid aus dem Gasstrom in den Altbaustoffstrom. Die Behandlungsvorrichtung ist ein Flugstromreaktor, insbesondere ein Steigrohr. Die Abtrennungsvorrichtung ist mit einem Altbaustoffauslass verbunden. Über den Altbaustoffauslass kann der mit Kohlendioxid beladene Altbaustoff entfernt und beispielsweise endgelagert oder einer weiteren Verwendung zugeführt werden.

Die Befeuchtungsvorrichtung kann beispielsweise eine Befeuchtungsschnecke oder ein Mischer sein.

Somit werden von der Behandlungsvorrichtung bis zur Abtrennungsvorrichtung der Gasstrom und der Altbaustoffstrom parallel geführt und somit der Altbaustoffstrom im Gasstrom. Damit unterscheidet sich die Vorrichtung von herkömmlichen Anlagen, welche mit einer Flüssigkeits-Feststoff-Phase in der Behandlungsvorrichtung arbeiten, sodass eine Trennung bereits in der Behandlungsvorrichtung erfolgt und somit keine nachgelagerte Abtrennungsvorrichtung vorhanden ist. Das bedeutet aber auch, dass nur ein deutlich geringerer Wasserdarf besteht und somit das Produkt (Altbaustoff mit gebundenem Kohlendioxid) bereits wesentlich trockener und damit ohne weitere Energiezufuhr verwendbar anfällt, beispielsweise um dieses dauerhaft zu speichern, was beispielsweise auch durch eine Wiederverwendung in der Bauindustrie erfolgen kann.

In einer weiteren Ausführungsform der Erfindung weist die Kohlendioxidabtrennungsanlage einen ersten Altbaustoffspeicher auf. Der Altbaustoffspeicher ist zwischen der Altbaustoffzufuhr und der Befeuchtungsvorrichtung angeordnet. Der Altbaustoffspeicher ist besonders bevorzugt, wenn eine Rückführung des Altbaustoffs erfolgt.

In einer weiteren Ausführungsform der Erfindung weist die Kohlendioxidabtrennungsanlage einen zweiten Altbaustoffspeicher auf. Der zweite Altbaustoffspeicher ist bevorzugt parallel zum ersten Altbaustoffspeicher angeordnet. Somit kann entweder aus dem ersten Altbaustoffspeicher oder aus dem zweiten Altbaustoffspeicher Altbaustoff der Befeuchtungsvorrichtung zugeführt werden. Ebenso kann aus der Altbaustoffzufuhr entweder dem ersten Altbaustoffspeicher oder dem zweiten Altbaustoffspeicher Altbaustoff zugeführt werden. Ist eine Rückführung vorhanden, so kann die Rückführung ebenfalls dem ersten Altbaustoffspeicher oder dem zweiten Altbaustoffspeicher zugeführt werden. Hierbei ist bevorzugt, dass beispielsweise aus dem ersten Altbaustoffspeicher Altbaustoff der Befeuchtungsvorrichtung zugeführt wird und über die Rückführung der Altbaustoff dem ersten Altbaustoffspeicher wieder zugeführt wird. Parallel kann der zweite Altbaustoffspeicher beispielsweise aus der Altbaustoffzuführung befüllt werden. Ist der Altbaustoff, welcher im Kreis geführt wird, ausreichend mit Kohlendioxid beladen, so kann dieser Altbaustoff aus der Kohlendioxidabtrennungsanlage entfernt werden. Anschließend wird dem zweiten Altbaustoffspeicher Altbaustoff der Befeuchtungsvorrichtung zugeführt und über die Rückführung der Altbaustoff dem zweiten Altbaustoffspeicher wieder zugeführt wird. Der nun geleerte erste Altbaustoffspeicher kann dann über die Altbaustoffzuführung wieder gefüllt werden.

In einer weiteren Ausführungsform der Erfindung weist die Kohlendioxidabtrennungsanlage eine Rückführungsvorrichtung auf. Die Rückführungsvorrichtung ist zur Aufnahme von Altbaustoff aus der Abtrennungsvorrichtung mit der Abtrennungsvorrichtung verbunden. Die Rückführungsvorrichtung ist zur Rückführung des Altbaustoffs vor die Befeuchtungsvorrichtung, insbesondere in den ersten Altbaustoffspeicher und/oder einen optionalen zweiten Altbaustoffspeicher, ausgebildet. Durch die Rückführung ist eine optimale Beladung und damit Ausnutzung des Altbaustoffes zur Abscheidung und Bindung von Kohlendioxids in einfacher Weise möglich. Dadurch ist es auch möglich, eine sehr breite Partikelgrößenverteilung zu verwenden, welche damit eine sehr unterschiedliche Kinetik aufweist.

Die Verwendung einer Rückführungsvorrichtung mit einem ersten Altbaustoffspeicher und einem zweiten Altbaustoffspeicher ermöglicht noch eine weitere Variante des Verfahrens. Beispielsweise erfolgt die Zuführung von frischem Altbaustoff aus der Altbaustoffzuführung nur in den ersten Altbaustoffspeicher und die Rückführung von der Rückführvorrichtung nur in den zweiten Altbaustoffspeicher. Hierbei wird nach der Abtrennung nur ein Teilstrom des Altbaustoffes zurückgeführt. Entsprechend dem hier ausgeschleusten Anteil wird aus dem ersten Altbaustoffspeicher und aus dem zweiten Altbaustoffspeicher Altbaustoff der Befeuchtungsvorrichtung zugeführt. Werden beispielsweise 80 % des Altbaustoffes zurückgeführt, so werden aus dem ersten Altbaustoffspeicher 1/5 und aus dem zweiten Altbaustoffspeicher 4/5 des der Befeuchtungsvorrichtung zugeführten Altbaustoffes entnommen.

In einer weiteren Ausführungsform der Erfindung weist die Abtrennungsvorrichtung eine erste Teilabtrennvorrichtung und eine zweite Teilabtrennvorrichtung auf. Insbesondere ist die erste Teilabtrennvorrichtung ein Sichter oder ein Abscheidezyklon, die zweite Teilabtrennvorrichtung ein Filter. Dieses hat zwei Vorteile. Neben der Abtrennung einer sehr feinen und üblicherweise bereits nach dem ersten Durchlauf bereits mit Kohlendioxid gesättigten Fraktion wird auch der Abgasstrom hierdurch soweit von Altbaustoff befreit, dass dieser an die Umgebung abgegeben werden kann.

In einer weiteren Ausführungsform der Erfindung ist die erste Teilabtrennvorrichtung mit der Rückführungsvorrichtung verbunden. Die zweite Teilabtrennvorrichtung ist mit dem Altbaustoffauslass verbunden. In dieser Ausführungsform erfolgt somit ein direktes Ausschleusen der Feinfraktion, während die Grobfraktion zurückgeführt wird. Vorteil ist auch, dass dadurch der Kreislauf nicht durch die bereits mit Kohlendioxid gesättigte Feinfraktion belastet wird.

In einer weiteren Ausführungsform der Erfindung weist die Behandlungsvorrichtung eine Nachbefeuchtungsvorrichtung auf. Die Nachbefeuchtungsvorrichtung kann beispielsweise eine Wassereindüsung oder auch die Zuführung von Wasserdampf sein. Hierdurch wir ein zu starkes Austrocknen des Altbaustoffes in der Behandlungsvorrichtung verhindert und gleichzeitig kann in der Befeuchtungsvorrichtung ein sehr geringer Feuchtegehalt eingestellt werden, was wiederum sehr gute Flugfähigkeit des Altbaustoffes bewirkt.

In einer weiteren Ausführungsform der Erfindung ist die Befeuchtungsvorrichtung eine Befeuchtungsschnecke.

In einer weiteren Ausführungsform der Erfindung weist die Kohlendioxidabtrennungsanlage eine Zerkleinerungsvorrichtung auf. Die Zerkleinerungsvorrichtung ist gasströmungstechnisch vor der Behandlungsvorrichtung angeordnet. Beispielsweise und bevorzugt ist die Zerkleinerungsvorrichtung eine Hammermühle. Weiter beispielhaft und bevorzugt ist die Behandlungsvorrichtung als Steigrohr ausgeführt und die Zerkleinerungsvorrichtung unter der Behandlungsvorrichtung angeordnet. Diese Anordnung hat den Vorteil, dass insbesondere große Partikel, die vom Gasstrom nicht im Steigrohr nach oben getragen werden, sondern durch die Schwerkraft nach unten in die Zerkleinerungsvorrichtung gelangen und dort zerkleinert und damit letztendlich flugfähig werden und durch den Gasstrom aus der Behandlungsvorrichtung ausgetragen werden. Der Vorteil ist, dass bereits kleine, flugfähige Partikel nicht weiter zerkleinert werden, wodurch Energie gespart wird. Natürlich ist es auch möglich, den Altbaustoff von der Befeuchtungsvorrichtung vollständig in die Zerkleinerungsvorrichtung einzubringen. Dieses ist besonders bevorzugt, wenn insbesondere die Feinfraktion nach einem Filter aus dem Kreislauf ausgeschleust wird, während die größere Fraktion nach einem Abscheidezyklon oder Sichter zurückgeführt wird. Durch das ständige erneute Einbringen in die Zerkleinerungsvorrichtung steigt so der Anteil des ausgetragenen feinen Materials.

In einer weiteren Ausführungsform der Erfindung ist die Zerkleinerungsvorrichtung unterhalb der Behandlungsvorrichtung angeordnet. Dieses ist, wie bereits ausgeführt bevorzugt, wenn die Behandlungsvorrichtung als Steigrohr ausgeführt ist.

In einer weiteren Ausführungsform der Erfindung ist die Behandlungsvorrichtung als Steigrohr ausgeführt.

In einer weiteren Ausführungsform der Erfindung ist die Zerkleinerungsvorrichtung eine Hammermühle.

In einer weiteren Ausführungsform der Erfindung weist die Kohlendioxidabtrennungsanlage eine Gasrückführung auf. Die Gasrückführung ist zur Rückführung wenigstens eines Teilgasstromes von der Abtrennungsvorrichtung zur Behandlungsvorrichtung ausgebildet. Hierdurch wird eine besonders hohe Minderung des Kohlendioxids im Gasstrom ermöglicht.

In einer weiteren Ausführungsform der Erfindung weist die Kohlendioxidabtrennungsanlage einen Sensor zur Messung der Kohlendioxidkonzentration im Gasstrom auf. Der Sensor ist zur Messung der Kohlendioxidkonzentration nach der Behandlungsvorrichtung angeordnet. Damit ist es möglich, entweder zyklisch das ausreichend vom Kohlendioxid befreite Gas vollständig abzugeben oder das Verhältnis zwischen Rückführung und Abgabe einzustellen, beispielsweise um eine höchstzulässige Emissionsvorgabe einhalten zu können.

Nachfolgend ist die erfindungsgemäße Kohlendioxidabtrennungsanlage anhand eines in den Zeichnungen dargestellten Ausführungsbeispiels näher erläutert.
- Fig. 1: erstes Ausführungsbeispiel
- Fig. 2: zweites Ausführungsbeispiel
- Fig. 3: drittes Ausführungsbeispiel

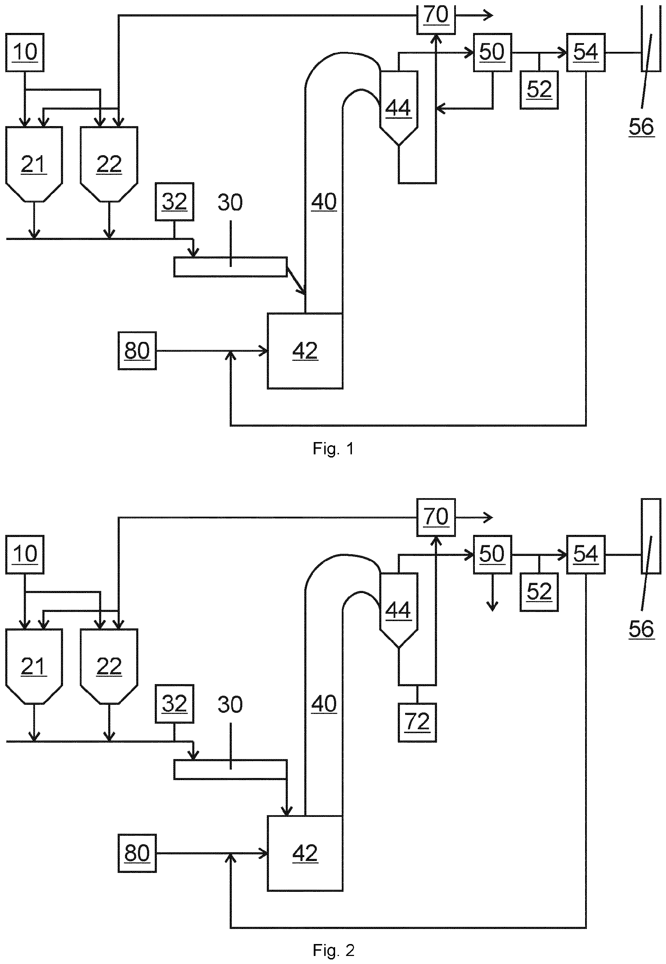

In Fig. 1 ist ein erstes Ausführungsbeispiel gezeigt. Über eine Altbaustoffzufuhr 10 wird Altbaustoff, beispielsweise Zementstein, in die Anlage eingebracht. Beispielsweise wird der Altbaustoff zunächst in den ersten Altbaustoffspeicher 21 eingebracht. Von dem ersten Altbaustoffspeicher 21 wird der Altbaustoff zur Befeuchtungsvorrichtung 30 an einem Feuchtigkeitssensor 32 vorbeigeführt. Entsprechend der durch den Feuchtigkeitssensor 32 festgestellten Feuchtigkeitsgehalt des Altbaustoffes wird in der Befeuchtungsvorrichtung 30 Wasser zugegeben, um einen Gehalt von beispielsweise 15 Gew.-% Wasser einzustellen. Beispielsweise ist die Befeuchtungsvorrichtung 30 als Befeuchtungsschnecke ausgeführt. Hierdurch ist eine schnelle und innige Vermischung möglich. Aus der Befeuchtungsvorrichtung 30 wird der Altbaustoff in die Behandlungsvorrichtung 40 in Form eines Steigrohres eingebracht. Die Behandlungsvorrichtung 40 in Form eines Steigrohres wird mit einem Abgas aus einer Gaszuführung 80 durchströmt. Durch die Gasströmung werden die kleinen Partikel des Altbaustoffes nach oben getragen, große Partikel sinken nach unten. Unterhalb der Behandlungsvorrichtung 40 ist eine Zerkleinerungsvorrichtung 42 in Form einer Hammermühle angeordnet. Dort werden die großen Partikel zerkleinert, bis diese durch den Gasstrom ausgetragen und in die Behandlungsvorrichtung 40 überführt werden. In der Behandlungsvorrichtung 40 erfolgt die Reaktion zwischen dem Kohlendioxid aus dem Gasstrom und beispielsweise CaO aus dem Altbaustoff zu CaCOs. Dadurch wird das Kohlendioxid aus dem Gasstrom entfernt und dauerhaft gebunden. In einem anschließenden Abscheidezyklon 44 wird der Hauptteil des Altbaustoffes aus dem Gasstrom entfernt. Der Gasstrom wird zur weiteren Reinigung durch einen Filter geleitet, in welchem auch sehr feine Altbaustoff-Partikel abgeschieden werden. Danach erfasst ein Sensor zur Messung der Kohlendioxidkonzentration 52 die Kohlendioxidkonzentration im Gasstrom. In Abhängigkeit der gemessenen Kohlendioxidkonzentration wird beispielsweise der Gasstromteiler 54 geregelt. Hierbei gibt es drei grundsätzlich verschiedene Vorgehen. Zum einen kann der Gasstromteiler 54 den Gasstrom vollständig rückführen, bis die erfasste Kohlendioxidkonzentration einen Vorgabewert (beispielsweise <2 Vol.-%) unterschreitet. Dann wird der Gasstromteiler 54 umgestellt und der Gasstrom vollständig zum Gasablass 56, beispielsweise einem Schornstein geführt. Gleichzeitig wird neues Gas aus der Gaszuführung 80 zugeführt. Zum zweiten kann der Gasstromteiler 54 variable geregelt werden, wobei die zum Gasablass 56 geführte Menge umso größer gewählt wird, je niedriger die erfasste Kohlendioxidkonzentration ist. In einer dritten Variante kann auf Sensor zur Messung der Kohlendioxidkonzentration 52 und den Gasstromteiler 54 verzichtet werden, der Gasstrom wird vollständig zum Gasablass 56 geführt. Dieses ist bevorzugt, wenn nur ein kleiner Teil des Kohlendioxids entfernt werden soll, beispielsweise um in einem vollständig mit regenerativen Energiequellen betriebenen Zementwerk nur den Kohlendioxidanteil aus dem Abgas zu reinigen, welcher aus den mineralischen Edukten stammt. Da aber vermutlich für eine solche Anwendung für vollständige Entfernung des Kohlendioxids vermutlich nicht ausreichend Altbaustoff zur Verfügung steht und daher nur eine Teilabtrennung möglich ist, kann eine direkte Abgabe des Gasstromes vorteilhaft sein.

Der aus dem Abscheidezyklon 44 und dem Filter 50 stammende Altbaustoff wird vereint und einem Altbaustoffstromteiler 70 zugeführt. Auch dieser kann unterschiedlich betrieben werden. Entweder wird zyklisch der Altbaustoff rezykliert und nur zeitweise vorzugsweise vollständig abgegeben, beispielsweise, wenn der Carbonatgehalt im Altbaustoff so hoch ist, dass eine weitere Rückführung nicht sinnvoll ist. Alternativ kann kontinuierlich ein Teilstrom abgetrennt und abgegeben werden, wohingegen ein zweiter Teilstrom zurückgeführt wird. Dieser zweite Teilstrom wird beispielswiese dem zweiten Altbaustoffspeicher zugeführt.

Fig. 2 zeigt ein zweites Ausführungsbeispiel. Dieses unterscheidet sich von ersten Ausführungsbeispiel dadurch, dass der aus dem Filter 50 abgeschiedene Altbaustoff direkt ausgeschleust und nicht rezykliert wird. Zum zweiten weist die Anlage einen Carbonat-Sensor 72 auf, mit welchem der Carbonatgehalt im Altbaustoff nach dem Abscheiden im Abscheidezyklon 44 erfasst wird. Bevorzugt führt der Altbaustoffstromteiler 70 den Altbaustoffstrom vollständig zurück, bis der am Carbonat-Sensor 72 erfasste Carbonatgehalt einen Schwellenwert übersteigt. Dann wird der Altbaustoffstrom vollständig ausgeschleust. Gleichzeitig wird dann die Zuführung von Altbaustoff aus dem ersten Altbaustoffspeicher und dem zweiten Altbauspeicher umgeschaltet, diese vertauschen somit ihre Aufgabe. Als dritter Unterschied wird der Altbaustoff nach der Befeuchtungsvorrichtung 30 direkt in die Zerkleinerungsvorrichtung 42 eingebracht und somit der Anteil kleiner und damit sehr schnell reagierender Partikel erhöht und gleichzeitig der Austrag des Altbaustoffes nach Abscheiden im Filter 50.

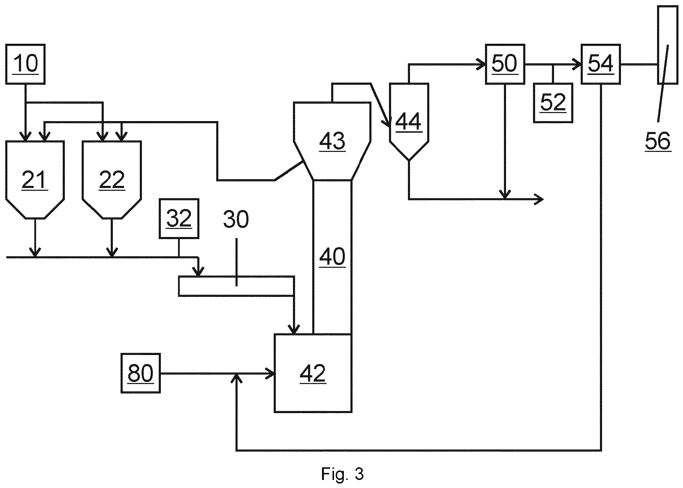

In Fig. 3 ist ein drittes Ausführungsbeispiel gezeigt. Das dritte Ausführungsbeispiel unterscheidet sich vom zweiten Ausführungsbeispiel dadurch, dass am Ende der als Steigrohr ausgeführten Behandlungsvorrichtung 40 ein Sichter 43 angeordnet ist. Dort werden sehr grobe Partikel des Altbaustoffes abgetrennt und vollständig zurückgeführt. Der im Abscheidezyklon 44 und im Filter 50 abgeschiedene Altbaustoff wird aus der Anlage entnommen.

### Bezugszeichen

- 10: Altbaustoffzufuhr
- 21: erster Altbaustoffspeicher
- 22: zweiter Altbaustoffspeicher
- 30: Befeuchtungsvorrichtung
- 32: Feuchtigkeitssensor
- 40: Behandlungsvorrichtung
- 42: Zerkleinerungsvorrichtung
- 43: Sichter
- 44: Abscheidezyklon
- 50: Filter
- 52: Sensor zur Messung der Kohlendioxidkonzentration
- 54: Gasstromteiler
- 56: Gasablass
- 70: Altbaustoffstromteiler
- 72: Carbonat-Sensor
- 80: Gaszuführung

## Patentansprüche

1. Verfahren zur Bindung von Kohlendioxid an einen Altbaustoff, wobei der Altbaustoff Altbeton oder ein Produkt aus Altbeton ist, wobei das Verfahren die folgenden nacheinander durchgeführten Schritte aufweist:
a) Bereitstellen des Altbaustoffes,
b) Befeuchten des Altbaustoffes auf eine Feuchte von 5 bis 25 Gew.-%, wobei die Feuchte nur flüchtiges Wasser umfasst, also kein Kristallwasser oder anderweitig in der Kristallstruktur eingebundenes Wasser,
c) Einbringen des Altbaustoffes in einen Kohlendioxid-haltigen Gasstrom und Transport des Altbaustoffes im Gasstrom für wenigstens 1 s in einem Flugstromreaktor,
d) Abtrennen des Altbaustoffes aus dem Gasstrom.

2. Verfahren nach Anspruch 1, **dadurch gekennzeichnet, dass** vor oder nach dem Einbringen in Schritt c) eine Zerkleinerung erfolgt.

3. Verfahren nach einem der vorstehenden Ansprüche, **dadurch gekennzeichnet, dass** während des Transportes in Schritt c) eine Nachbefeuchtung zusätzlich zum Befeuchten in Schritt b) erfolgt.

4. Verfahren nach einem der vorstehenden Ansprüche, **dadurch gekennzeichnet, dass** die Abtrennung in Schritt d) zweistufig erfolgt und zunächst in einem ersten Teilschritt die größeren Partikel abgeschieden werden und in einem zweiten Teilschritt die kleineren Partikel abgeschieden werden.

5. Verfahren nach einem der vorstehenden Ansprüche, **dadurch gekennzeichnet, dass** nach Schritt d) eine Rückführung des Altbaustoffes erfolgt, sodass die Schritte b) bis d) wiederholt werden.

6. Verfahren nach Anspruch 5, **dadurch gekennzeichnet, dass** eine Bestimmung des CO₂-Gehalts des Altbaustoffes durchgeführt wird, wobei die Rückführung des Altbaustoffes und Wiederholung der Schritte b) bis d) solange erfolgt, bis ein vorgegebener Schwellenwert des CO₂-Gehalts überschritten wird.

7. Verfahren nach Anspruch 6, **dadurch gekennzeichnet, dass** der Schwellenwert des CO₂-Gehalts auf 60 %, bevorzugt 70 %, weiter bevorzugt 80 %, weiter bevorzugt 85 %, weiter bevorzugt 90 %, weiter bevorzugt 85 %,der Summe an Calcium, Magnesium und Eisen festgelegt wird.

8. Verfahren nach einem der Ansprüche 5 bis 7, **dadurch gekennzeichnet, dass** die Abtrennung in Schritt d) größenselektiv in wenigstens zwei Fraktionen erfolgt, wobei die gröbere Fraktion zurückgeführt wird und wobei die feinere Fraktion aus dem Prozess ausgeschleust wird.

9. Verfahren nach einem der vorstehenden Ansprüche, **dadurch gekennzeichnet, dass** vor und/oder nach dem Befeuchten in Schritt b) eine Messung des Feuchtegehalts durchgeführt wird, wobei die Messung des Feuchtegehalts bevorzugt mittels eines NIR-Sensors erfolgt.

10. Verfahren nach einem der vorstehenden Ansprüche, **dadurch gekennzeichnet, dass** als Gasstrom in Schritt c) ein Abgasstrom gewählt wird.

11. Verfahren nach einem der vorstehenden Ansprüche, **dadurch gekennzeichnet, dass** nach Schritt d) der Gasstrom wenigstens teilweise vor den Schritt c) zurückgeführt wird.

12. Verfahren nach Anspruch 11, **dadurch gekennzeichnet, dass** im Gasstrom nach dem Transport in Schritt c) die Kohlendioxid-Konzentration im Gasstrom erfasst wird, wobei der Anteil der vor den Schritt c) zurückgeführten Menge des Gasstroms in Abhängigkeit von der ermittelten Kohlendioxidkonzentration gewählt wird

13. Kohlendioxidabtrennungsanlage, wobei die Kohlendioxidabtrennungsanlage eine Gaszuführung (80), eine der Gaszuführung (80) strömungstechnisch nachgelagerte Behandlungsvorrichtung (40), eine der Behandlungsvorrichtung (40) strömungstechnisch nachgelagerte Abtrennungsvorrichtung und einen der Abtrennungsvorrichtung strömungstechnisch nachgelagerten Gasablass (56) aufweist, wobei die Kohlendioxidabtrennungsanlage eine Altbaustoffzufuhr (10) aufweist, wobei die Altbaustoffzufuhr (10) mit einer Befeuchtungsvorrichtung (30) zur Überführung des Altbaustoffs verbunden ist, wobei die Befeuchtungsvorrichtung (30) mit der Behandlungsvorrichtung (40) verbunden ist, wobei die Behandlungsvorrichtung (40) ein Flugstromreaktor ist, wobei die Abtrennungsvorrichtung mit einem Altbaustoffauslass verbunden ist.

14. Kohlendioxidabtrennungsanlage nach Anspruch 13, **dadurch gekennzeichnet, dass** die Kohlendioxidabtrennungsanlage einen ersten Altbaustoffspeicher (21) aufweist, wobei der erste Altbaustoffspeicher (21) zwischen der Altbaustoffzufuhr (10) und der Befeuchtungsvorrichtung (30) angeordnet ist.

15. Kohlendioxidabtrennungsanlage nach einem der Ansprüche 13 bis 14, **dadurch gekennzeichnet, dass** die Kohlendioxidabtrennungsanlage eine Rückführungsvorrichtung aufweist, wobei die Rückführungsvorrichtung zur Aufnahme von Altbaustoff aus der Abtrennungsvorrichtung mit der Abtrennungsvorrichtung verbunden ist, wobei die Rückführungsvorrichtung zur Rückführung des Altbaustoffs vor die Befeuchtungsvorrichtung (30), insbesondere in den ersten Altbaustoffspeicher (21), ausgebildet ist.

16. Kohlendioxidabtrennungsanlage nach einem der Ansprüche 13 bis 15, **dadurch gekennzeichnet, dass** die Abtrennungsvorrichtung eine erste Teilabtrennvorrichtung und eine zweite Teilabtrennvorrichtung aufweist.

17. Kohlendioxidabtrennungsanlage nach Anspruch 16, **dadurch gekennzeichnet, dass** die erste Teilabtrennvorrichtung ein Sichter (43) oder ein Abscheidezyklon (44) ist, wobei die zweite Teilabtrennvorrichtung ein Filter (50) ist.

18. Kohlendioxidabtrennungsanlage nach einem der Ansprüche 16 bis 17, **dadurch gekennzeichnet, dass** die erste Teilabtrennvorrichtung mit der Rückführungsvorrichtung verbunden ist und die zweite Teilabtrennvorrichtung dem Altbaustoffauslass verbunden ist.

19. Kohlendioxidabtrennungsanlage nach einem der Ansprüche 13 bis 18, **dadurch gekennzeichnet, dass** die Behandlungsvorrichtung (40) eine Nachbefeuchtungsvorrichtung aufweist.

20. Kohlendioxidabtrennungsanlage nach einem der Ansprüche 13 bis 19, **dadurch gekennzeichnet, dass** die Befeuchtungsvorrichtung (30) eine Befeuchtungsschnecke ist.

21. Kohlendioxidabtrennungsanlage nach einem der Ansprüche 13 bis 20, **dadurch gekennzeichnet, dass** die Kohlendioxidabtrennungsanlage eine Zerkleinerungsvorrichtung (42) aufweist, wobei die Zerkleinerungsvorrichtung (42) gasströmungstechnisch vor der Behandlungsvorrichtung (40) angeordnet ist.

22. Kohlendioxidabtrennungsanlage nach Anspruch 21, **dadurch gekennzeichnet, dass** die Zerkleinerungsvorrichtung (42) unterhalb der Behandlungsvorrichtung (40) angeordnet ist.

23. Kohlendioxidabtrennungsanlage nach Anspruch 22, **dadurch gekennzeichnet, dass** die Behandlungsvorrichtung (40) als Steigrohr ausgeführt ist.

24. Kohlendioxidabtrennungsanlage nach einem der Ansprüche 21 bis 23, **dadurch gekennzeichnet, dass** die Zerkleinerungsvorrichtung (42) eine Hammermühle ist.

25. Kohlendioxidabtrennungsanlage nach einem der Ansprüche 13 bis 24, **dadurch gekennzeichnet, dass** die Kohlendioxidabtrennungsanlage eine Gasrückführung aufweist, wobei die Gasrückführung zur Rückführung wenigstens eines Teilgasstromes von der Abtrennungsvorrichtung zur Behandlungsvorrichtung (40) ausgebildet ist.

26. Kohlendioxidabtrennungsanlage nach Anspruch 25, **dadurch gekennzeichnet, dass** die Kohlendioxidabtrennungsanlage einen Sensor zur Messung der Kohlendioxidkonzentration (52) im Gasstrom aufweist, wobei der Sensor zur Messung der Kohlendioxidkonzentration (52) nach der Behandlungsvorrichtung (40) angeordnet ist.

## Claims

1. A method for binding carbon dioxide to an old building material, the old building material being old concrete or a product of old concrete, the method comprising the following successive steps:
a) Provision of the old building material,
b) Moisturising the old building material to a moisture content of 5 to 25% by weight, whereby the moisture only comprises volatile water, i.e. no water of crystallisation or water otherwise incorporated in the crystal structure,
c) Introduction of the used building material into a carbon dioxide-containing gas stream and transport of the used building material in the gas stream for at least 1 s in an entrained-flow reactor,
d) Separation of the old building material from the gas flow.

2. Method according to claim 1, **characterised in that** comminution takes place before or after the introduction in step c).

3. Method according to one of the preceding claims, **characterised in that** during the transport in step c) a remoistening takes place in addition to the moistening in step b).

4. Process according to one of the preceding claims, **characterised in that** the separation in step d) is carried out in two stages and initially the larger particles are separated in a first sub-step and the smaller particles are separated in a second sub-step.

5. Method according to one of the preceding claims, **characterised in that** after step d) the old building material is recycled, so that steps b) to d) are repeated.

6. Method according to claim 5, **characterised in that** the CO₂ content of the old building material is determined, the old building material being recycled and steps b) to d) being repeated until a predetermined threshold value of the CO₂ content is exceeded.

7. Method according to claim 6, **characterised in that** the threshold value of the CO₂ content is set at 60 %, preferably 70 %, more preferably 80 %, more preferably 85 %, more preferably 90 %, more preferably 85 %,of the sum of calcium, magnesium and iron.

8. Process according to one of claims 5 to 7, **characterised in that** the separation in step d) is carried out size-selectively in at least two fractions, the coarser fraction being recycled and the finer fraction being discharged from the process.

9. Method according to one of the preceding claims, **characterised in that** a measurement of the moisture content is carried out before and/or after the moistening in step b), the measurement of the moisture content preferably being carried out by means of an NIR sensor.

10. Method according to one of the preceding claims, **characterised in that** an exhaust gas stream is selected as the gas stream in step c).

11. Process according to one of the preceding claims, **characterised in that** after step d) the gas stream is at least partially recycled before step c).

12. Method according to claim 11, **characterised in that** the carbon dioxide concentration in the gas stream after transport in step c) is detected, the proportion of the quantity of the gas stream returned before step c) being selected as a function of the carbon dioxide concentration determined

13. Carbon dioxide separation plant, the carbon dioxide separation plant having a gas feed (80), a treatment device (40) downstream of the gas feed (80), a separation device downstream of the treatment device (40) and a gas outlet (56) downstream of the separation device, wherein the carbon dioxide separation plant has an old building material feed (10), wherein the old building material feed (10) is connected to a humidification device (30) for transferring the old building material, wherein the humidification device (30) is connected to the treatment device (40), wherein the treatment device (40) is an entrained-flow reactor, wherein the separation device is connected to an old building material outlet.

14. Carbon dioxide separation plant according to claim 13, **characterised in that** the carbon dioxide separation plant has a first used building material store (21), the first used building material store (21) being arranged between the used building material feed (10) and the humidification device (30).

15. Carbon dioxide separation plant according to one of claims 13 to 14, **characterised in that** the carbon dioxide separation plant has a return device, the return device being connected to the separation device for receiving old building material from the separation device, the return device being designed to return the old building material upstream of the humidification device (30), in particular into the first old building material store (21).

16. A carbon dioxide separation system according to any one of claims 13 to 15, **characterised in that** the separation device comprises a first partial separation device and a second partial separation device.

17. Carbon dioxide separation plant according to claim 16, **characterised in that** the first partial separation device is a separator (43) or a separator cyclone (44), the second partial separation device being a filter (50).

18. Carbon dioxide separation plant according to one of claims 16 to 17, **characterised in that** the first partial separation device is connected to the recirculation device and the second partial separation device is connected to the waste material outlet.

19. Carbon dioxide separation plant according to one of claims 13 to 18, **characterised in that** the treatment device (40) comprises a post-humidification device.

20. Carbon dioxide separation plant according to one of claims 13 to 19, **characterised in that** the humidification device (30) is a humidification screw.

21. Carbon dioxide separation plant according to one of claims 13 to 20, **characterised in that** the carbon dioxide separation plant has a comminution device (42), the comminution device (42) being arranged upstream of the treatment device (40) in terms of gas flow.

22. Carbon dioxide separation plant according to claim 21, **characterised in that** the comminution device (42) is arranged below the treatment device (40).

23. Carbon dioxide separation plant according to claim 22, **characterised in that** the treatment device (40) is designed as a riser pipe.

24. Carbon dioxide separation plant according to any one of claims 21 to 23, **characterised in that** the comminution device (42) is a hammer mill.

25. Carbon dioxide separation plant according to one of claims 13 to 24, **characterised in that** the carbon dioxide separation plant has a gas recirculation system, the gas recirculation system being designed to recirculate at least one partial gas stream from the separation device to the treatment device (40).

26. Carbon dioxide separation plant according to claim 25, **characterised in that** the carbon dioxide separation plant has a sensor for measuring the carbon dioxide concentration (52) in the gas stream, the sensor for measuring the carbon dioxide concentration (52) being arranged downstream of the treatment device (40).

## Revendications

1. Méthode pour lier le dioxyde de carbone à un matériau de construction ancien, le matériau de construction ancien étant du béton ancien ou un produit de béton ancien, la méthode comprenant les étapes successives suivantes :
a) Mise à disposition des anciens matériaux de construction,
b) Hydratation de l'ancien matériau de construction jusqu'à une teneur en eau de 5 à 25 % en poids, , l'humidité ne comprenant que de l'eau volatile, c'est-à-dire pas d'eau de cristallisation ou d'eau incorporée d'une autre manière dans la structure cristalline,
c) Introduction du matériau de construction usagé dans un flux gazeux contenant du dioxyde de carbone et transport du matériau de construction usagé dans le flux gazeux pendant au moins 1 s dans un réacteur à flux entraîné,
d) Séparation du vieux matériau de construction du flux de gaz.

2. Procédé selon la revendication 1, **caractérisé par le fait que** le broyage a lieu avant ou après l'introduction à l'étape c).

3. Procédé selon l'une des revendications précédentes, **caractérisé par le fait que** pendant le transport à l'étape c), une réhumidification a lieu en plus de l'humidification à l'étape b).

4. Procédé selon l'une des revendications précédentes, **caractérisé par le fait que** la séparation à l'étape d) est effectuée en deux étapes et que, dans un premier temps, les particules les plus grosses sont séparées dans une première sous-étape et les particules les plus petites sont séparées dans une deuxième sous-étape.

5. Procédé selon l'une des revendications précédentes, **caractérisé par le fait qu'**après l'étape d), le vieux matériau de construction est recyclé, de sorte que les étapes b) à d) sont répétées.

6. Méthode selon la revendication 5, **caractérisée par la** détermination de la teneur en CO₂ de l'ancien matériau de construction, le recyclage de l'ancien matériau de construction et la répétition des étapes b) à d) jusqu'à ce qu'une valeur seuil prédéterminée de la teneur en CO₂ soit dépassée.

7. Procédé selon la revendication 6, **caractérisé par le fait que** la valeur seuil de la teneur en CO₂ est fixée à 60 %, de préférence 70 %, de préférence 80 %, de préférence 85 %, de préférence 90 %, de préférence 85 %, de la somme du calcium, du magnésium et du fer.

8. Procédé selon l'une des revendications 5 à 7, **caractérisé par le fait que** la séparation à l'étape d) est effectuée de manière sélective en deux fractions au moins, la fraction la plus grossière étant recyclée et la fraction la plus fine étant évacuée du procédé.

9. Procédé selon l'une des revendications précédentes, **caractérisé par le fait qu'**une mesure de la teneur en eau est effectuée avant et/ou après l'humidification à l'étape b), la mesure de la teneur en eau étant de préférence effectuée au moyen d'un capteur NIR.

10. Méthode selon l'une des revendications précédentes, **caractérisée par le fait qu'**un flux de gaz d'échappement est sélectionné comme flux de gaz à l'étape c).

11. Procédé selon l'une des revendications précédentes, **caractérisé par le fait qu'**après l'étape d), le flux gazeux est au moins partiellement recyclé avant l'étape c).

12. Méthode selon la revendication 11, **caractérisée par le fait que** la concentration de dioxyde de carbone dans le flux gazeux après le transport à l'étape c) est détectée, la proportion de la quantité du flux gazeux retourné avant l'étape c) étant sélectionnée en fonction de la concentration de dioxyde de carbone déterminée.

13. Installation de séparation du dioxyde de carbone, l'installation de séparation du dioxyde de carbone ayant une alimentation en gaz (80), un dispositif de traitement (40) en aval de l'alimentation en gaz (80), un dispositif de séparation en aval du dispositif de traitement (40) et une sortie de gaz (56) en aval du dispositif de séparation, dans laquelle l'installation de séparation du dioxyde de carbone a une alimentation en vieux matériaux de construction (10), dans laquelle l'alimentation en vieux matériaux de construction (10) est reliée à un dispositif d'humidification (30) pour transférer les vieux matériaux de construction, dans laquelle le dispositif d'humidification (30) est relié au dispositif de traitement (40), dans laquelle le dispositif de traitement (40) est un réacteur à flux entraîné, dans laquelle le dispositif de séparation est relié à une sortie de vieux matériaux de construction.

14. Installation de séparation du dioxyde de carbone selon la revendication 13, **caractérisée par le fait que** l'installation de séparation du dioxyde de carbone comporte un premier magasin de matériaux de construction usagés (21), le premier magasin de matériaux de construction usagés (21) étant disposé entre l'alimentation en matériaux de construction usagés (10) et le dispositif d'humidification (30).

15. Installation de séparation du dioxyde de carbone selon l'une des revendications 13 à 14, **caractérisée par le fait que** l'installation de séparation du dioxyde de carbone comporte un dispositif de retour, le dispositif de retour étant relié au dispositif de séparation pour recevoir les matériaux de construction usagés du dispositif de séparation, le dispositif de retour étant conçu pour renvoyer les matériaux de construction usagés en amont du dispositif d'humidification (30), en particulier dans le premier magasin de matériaux de construction usagés (21).

16. Système de séparation du dioxyde de carbone selon l'une des revendications 13 à 15, **caractérisé par le fait que** le dispositif de séparation comprend un premier dispositif de séparation partielle et un second dispositif de séparation partielle.

17. Installation de séparation du dioxyde de carbone selon la revendication 16, **caractérisée par le fait que** le premier dispositif de séparation partielle est un séparateur (43) ou un cyclone séparateur (44), le second dispositif de séparation partielle étant un filtre (50).

18. Installation de séparation du dioxyde de carbone selon l'une des revendications 16 à 17, **caractérisée par le fait que** le premier dispositif de séparation partielle est relié au dispositif de recirculation et que le second dispositif de séparation partielle est relié à la sortie des déchets.

19. Installation de séparation du dioxyde de carbone selon l'une des revendications 13 à 18, **caractérisée par le fait que** le dispositif de traitement (40) comprend un dispositif de post-humidification.

20. Installation de séparation du dioxyde de carbone selon l'une des revendications 13 à 19, **caractérisée par le fait que** le dispositif d'humidification (30) est une vis d'humidification.

21. Installation de séparation du dioxyde de carbone selon l'une des revendications 13 à 20, **caractérisée par le fait que** l'installation de séparation du dioxyde de carbone comporte un dispositif de broyage (42), le dispositif de broyage (42) étant disposé en amont du dispositif de traitement (40) en termes de flux de gaz.

22. Installation de séparation du dioxyde de carbone selon la revendication 21, **caractérisée par le fait que** le dispositif de broyage (42) est disposé sous le dispositif de traitement (40).

23. Installation de séparation du dioxyde de carbone selon la revendication 22, **caractérisée par le fait que** le dispositif de traitement (40) est conçu comme une conduite montante.

24. Installation de séparation du dioxyde de carbone selon l'une des revendications 21 à 23, **caractérisée par le fait que** le dispositif de broyage (42) est un broyeur à marteaux.

25. Installation de séparation du dioxyde de carbone selon l'une des revendications 13 à 24, **caractérisée par le fait que** l'installation de séparation du dioxyde de carbone comporte un système de recirculation des gaz, le système de recirculation des gaz étant conçu pour faire recirculer au moins un flux gazeux partiel du dispositif de séparation vers le dispositif de traitement (40).

26. Installation de séparation du dioxyde de carbone selon la revendication 25, **caractérisée par le fait que** l'installation de séparation du dioxyde de carbone comporte un capteur pour mesurer la concentration de dioxyde de carbone (52) dans le flux gazeux, le capteur pour mesurer la concentration de dioxyde de carbone (52) étant placé en aval du dispositif de traitement (40).
